# EUROPÄISCHE PATENTANMELDUNG

(11) **EP 2 230 399 A2**
(43) Veröffentlichungstag der Anmeldung: **22.09.2010**
(21) Anmeldenummer: 10075027.2
(22) Anmeldetag: 20.01.2010
(51) Int. Cl.: F03B 13/18

(54) **Anlage zur Nutzung der Meereswellen**

(30) Priorität: 20.03.2009 DE 202009003864 U
(71) Anmelder: IEE Ingenieurbüro Energieeinsparung GmbH, 12587 Berlin (DE); Harrand, Kurt, 10367 Berlin (DE)
(72) Erfinder: Harrand, Kurt, 10367 Berlin (DE)
(74) Vertreter: Reimann, Wolfgang

(57) **Zusammenfassung**

Anlage zur Nutzung der Meereswellen vorzugsweise zur Erzeugung von elektrischer Energie und zur Dämpfung der Wellenergie im Bereich der Küstenzonen mittels eines Schwimmkörpers mit entsprechender Formgebung, der in einem bis zu 90% getauchten Zustand in der Welle schwimmt und von den Wassermassen der Welle sowohl in vertikaler als auch horizontaler Ebene hin und her bewegt wird. Diese Hin- und Her-Bewegungen über Gestänge, die über Gelenke mit dem Schwimmkörper und einem auf dem Meeresboden verankertem Gestell mit einer Pendelvorrichtung verbunden sind, werden als lineare Bewegungen zur Erzeugung von elektrischer Energie oder hydraulischer Energie über entsprechende Vorrichtungen in der Pendelvorrichtung genutzt.

Die elektrische Energiegewinnung erfolgt durch den in der Pendelvorrichtung eingebauten elektrischen Lineargenerator, der die Hin- und Her-Bewegungen des Gestänges direkt nutzt, oder durch einen in der Pendelvorrichtung eingebauten rotierenden elektrischen Generator, wobei die Hin- und Her-Bewegungen des Gestänges über eine Zahnstange und die damit verzahnten Ritzeln, welche gegenläufige Freiläufe besitzen, in eine in die gleiche Richtung wirkende Drehbewegung umgeformt und zum Antrieb des elektrischen Generators genutzt werden.

Neben der Gewinnung von elektrischer Energie ist die Gewinnung von hydraulischer Energie vorgesehen, dazu werden über die Hin- und Her-Bewegungen des Gestänges die Kolben der im Pendelgehäuse gegenläufigen ventilgesteuerten hydraulischen Pumpen angetrieben.

## Beschreibung

Die Erfindung hat eine Anlage zur Nutzung der Meereswellen vorzugsweise zur Erzeugung von elektrischer Energie zum Inhalt.

Diese Anlage soll neben der Erzeugung von elektrischer Energie auch zur Dämpfung der Wellenergie im Bereich der Küstenzonen dienen.

Anlagen zur energetischen Nutzung der Meereswellen sind seit längerem Gegenstand von technischen Lösungen, die besonders im Patentschrifttum und in populären wissenschaftlich-technischen Veröffentlichungen dargestellt sind.

Vielen gemeinsam ist die Nutzung der Höhe der Wellen, indem verankerte Schwimmkörper eine durch die Wellen erzeugte Auf- und Abwärtsbewegung vollführen und diese Bewegung, verbunden mit der Auftriebskraft des Schwimmkörpers, zum Antrieb eines elektrischen Generators oder einer mechanischen Pumpe genutzt wird.

Ein weiteres Prinzip sind elastische, über Gelenke gekoppelte Schwimmkörper zur energetischen Nutzung von Meereswellen, die sich den Wellenbergen und

Wellentälern anpassen und über die Gelenkbewegungen zwischen den Schwimmkörpern die mechanische Energie in elektrische Energie umwandeln.

Es gibt weiter Vorschläge zur Nutzung, von Meereswellen, bei denen die Wassermassen der Wellen in fest verankerte Hohlkörper ein- und ausströmen und diese Strömungsenergie über Turbinen zur elektrischen Energieerzeugung genutzt wird.

Die Aufgabe der Erfindung besteht darin, ausgehend von den vielfältigen als Stand der Technik einzustufenden technischen Lösungen für die Nutzung von Meereswellen zur Gewinnung elektrischer Energie, eine technische Lösung vorzuschlagen, die bekannte technische Komponenten nutzt und auch im Bereich der Küstenzonen zum Einsatz gelangt sowie gleichzeitig die Brandung im Uferbereich dämpft.

Die erfindungsgemäße Lösung nutzt die in der Meereswelle sich vollziehenden Wasserbewegungen aus, indem ein Schwimmkörper (8) mit entsprechender Formgebung in einem bis zu 90% getauchten Zustand in der Welle (4) schwimmt und von den Wassermassen der Welle (4) sowohl in vertikaler als auch horizontaler Ebene hin und her bewegt wird. Dieser Schwimmkörper (8) ist über ein in der Länge in sich verschiebbaren Gestänge (7) mit einem im Meeresboden (3) fest verankerten Gestell (1) verbunden und bewegt sich in einer Art rotierender Bewegung entsprechend der Wellenfolge.

Über die verschiebbaren Gestänge (7) wird die Bewegungsenergie mechanisch abgegriffen und mittels elektrischer Lineargeneratoren (6.7) oder mit einem speziellem Getriebe im Pendelgehäuse (6) und dem damit verbundenen elektrischen Generator (6.8) in elektrische Energie umgewandelt.

Für die Umwandlung der vom Schwimmkörper (8) auf die Gestänge (7) übertragenen linearen Bewegungsenergie sind elektrische Lineargeneratoren (6.7) besonders vorteilhaft geeignet, da diese keine rotierenden Elemente benötigen und die Dichtungsprobleme, wie diese im Meerwasser erforderlich sind, sich hier am vorteilhaftesten lösen lassen.

Bei der Verwendung von rotierenden elektrischen Generatoren (6.8) müssen Getriebe die linearen Hin- und Herbewegungen in eine in einer Richtung rotierende Drehbewegung umformen. Dies ist mit Hilfe einer Zahnstange (6.1) möglich, welche die Linearbewegung ausführt. Mit dieser Zahnstange (6.1) sind Ritzel mit gegenläufigem Freilauf verbunden(6.2), die die Linearbewegung in eine rotierende Bewegung umformen.

Soll an Stelle der Gewinnung von elektrischer Energie hydraulische Energie gewonnen werden, so werden an Stelle der Ritzel (6.2) über die Zahnstange (6.1) gegenläufige ventilgesteuerte hydraulische Pumpen (6.10) angetrieben, die so die Hin- und Herbewegung im Gestänge (7) zum Pumpen nutzen.

### Die erfinderische Lösung wird nachfolgend an einem Beispiel dargestellt:

Die Anlage besteht aus einem Schwimmkörper (7), der mit Ballast versehen ist und damit bis zu 90% getaucht im Wasser schwimmt, sowie einem am Meeresboden (3) verankerten Gestell (1) zur Führung der mit dem Schwimmkörper (8) beweglich verbundenen Gestänge (7), vorzugsweise 4 (vier) kreuzweise Gestänge (7), bewegt.

Die Anordnung der Gestänge (7) am verankerten Gestell (1) ist so ausgebildet, dass eine lineare Bewegung der Gestänge (7) erfolgen kann.

Diese lineare Bewegung der Gestänge (7) erfolgt beim Auf- und Abbewegen, sowie dem Hin- und Herbewegen des Schwimmkörpers (8) mit der Meereswellenbewegung. Dies bedeutet, dass der Schwimmkörper (8) alle Wasserbewegungen der Meereswelle (4) vollführt und diese auf die Gestänge (7) als lineare Bewegung überträgt. Das verankerte Gestell (1) ist konstruktiv so gestaltet, dass sich das Gestell (1) bzw. die Pendelgehäuse (6) im Gestell (1) (6) in vertikaler und horizontaler Richtung einstellen können. So ist der Schwimmkörper (8) in der Lage, ein Maximum an kinetischer und potentieller Energie über die Gestänge (7) aufzunehmen, an die am Gestell (1) angeordneten Pendelgehäuse (6) bzw. Energiewandler weiterzuleiten und gleichzeitig quer wirkende mechanische Kräfte auf das Gestell (1) zu minimieren.

Die Gestänge (7) bewegen sich im Pendelgehäuse (6). In diesem Pendelgehäuse (6) sind die Energiewandler enthalten, die als elektrische Lineargeneratoren (6.7) oder als rotierende elektrische Generatoren (6.8) die mit Hilfe einer Zahnstange (6.1) und den verbunden Ritzeln (6.2) mit gegenläufigem Freilauf, welche die lineare Hin- und Herbewegung in eine rotierende Bewegung umformen, angeordnet sind. Weiter können gegenläufige ventilgesteuerte hydraulische Pumpen angeordnet werden, die ebenfalls die Hin- und Herbewegung der Gestänge nutzen.

Die Gestänge von den Befestigungsgelenken (8.1) des Schwimmkörpers (8) sind doppelt über Kreuz in die Pendelgehäuse (6) des Gestells (1) wie folgt angeordnet:
Vom Schwimmkörper (8) oben links (7.1) zum Pendelgehäuse (6) unten rechts (7.1)
Vom Schwimmkörper (8) oben rechts (7.2) zum Pendelgehäuse (6) unten links (7.2)
Vom Schwimmkörper (8) unten links (7.3) zum Pendelgehäuse (6) oben rechts (7.3)
Vom Schwimmkörper (8) unten rechts (7.4) zum Pendelgehäuse (6) oben links, (7.4)
Mit dieser Anordnung der Gestänge (7) zum Gestell (1) werden alle Bewegungen des Schwimmkörpers (8) auf die im Pendelgehäuse (6) enthaltenen Energiewandler wirksam.

Schwimmkörper (8) und Gestell (1) am Meeresboden (3) bilden eine konstruktive Einheit, die das Spiel der Bewegungen des Schwimmkörpers (8) zum Gestell (1) am Meeresboden (3) zur Energiegewinnung nutzt. Über Fixierungen der Gestänge (7) am Pendelgehäuse (6) wird das Spiel der Bewegungen des Schwimmkörpers (8) begrenzt.

Die Richtung der Wellen (4) gegen die Küste wird durch die Richtung des Windes bestimmt. Für eine optimale Nutzung der Wellenenergie und eine Dämpfung der Brandung ist die Einstellung des Schwimmkörpers mit seiner Breitseite gegenüber den Wellen nicht notwendig.

Bei einem zu erwartenden hohen Wellengang (geht aus der Analyse hervor) ist vor dem Errichten, d. h. bei der Konstruktion der Anlage, ein längeres Gestänge vorzusehen, weil sich damit die Auslenkung verringert.

Mit der Anordnung der erfindungsgemäßen Anlagen als Gruppen vor der Küste ist eine Dämpfung der Brandung ähnlich einer Sandbank grundsätzlich möglich.

**Bezugszeichen**

| | |
|---|---|
| 01 | Figur 1, Schematische Seitenansicht |
| 02 | Figur 2, Schnitt A - A auf das Gestell |
| 03 | Figur 3, Schnitt B - B durch das Pendelgehäuse |
| 04 | Figur 4, Seitenansicht |
| 05 | Figur 5, Draufsicht |
| 06 | Figur 6, Schwimmkörper |
| 07 | Figur 7, Zweite Krafteinheit |
| 1 | Gestell |
| 1.1 | Befestigungsrahmen für die zweite (2) Krafteinheit |
| 1.2 | Abstandsgestänge für zweite (2.) Krafteinheit |
| 2 | Fundament |
| 3 | Meeresgrund |
| 4 | Wellen |
| 5 | Pendelrahmen |
| 5.1 | Pendelbolzen |
| 6 | Pendelgehäuse 7.1 /7.2/7.3/7.4 |
| 6.1 | Zahnstange |
| 6.2 | Zahnrad |
| 6.3 | Zahnstangenführung |
| 6.4 | Ausgleich - Druck- oder Zugfeder |
| 6.5 | Gleitlager |
| 6.6 | O - Ringe (Dichtung) |
| 6.7 | Lineargenerator |
| 6.7.1 | Zahnrad mit Kurbel |
| 6.7.2 | Pleuelstange |
| 6.7.3 | Kolbenstange |
| 6.8 | Generator |
| 6.9 | Verschlussdeckel der Zahnstangenführung |
| 6.10 | Pumpe ( Stelzmotor) |
| 6.10.1 | Einlassventil |
| 6.10.2 | Auslassventil |
| 6.10.3 | Kolben |
| 7 | Gestänge 7.1 / 7. 2 / 7. 3 / 7. 4 |
| 8 | Schwimmkörper |
| 8.1 | Befestigungsgelenke für Gestänge 7.1 / 7. 2 / 7. 3 / 7. 4 |
| 8.2 | Schwimmkörper Rückseite |

## Patentansprüche

1. Anlage zur Nutzung der Meereswellen vorzugsweise zur Erzeugung von elektrischer Energie und zur Dämpfung der Wellenergie im Bereich der Küstenzonen **dadurch gekennzeichnet, dass** ein Schwimmkörper (8) mit entsprechender Formgebung in einem bis zu 90% getauchten Zustand in der Welle (4) schwimmt und von den Wassermassen der Welle (4) sowohl in vertikaler als auch horizontaler Ebene hin und her bewegt wird und diese Hin- und Herbewegungen über Gestänge (7), die über Gelenke (8.1) mit dem Schwimmkörper (8) und einem auf dem Meeresboden (3) verankertem Gestell (1) mit einer Pendelvorrichtung (6) verbunden sind, als lineare Bewegungen zur Erzeugung von elektrischer Energie oder hydraulischer Energie über entsprechende Vorrichtungen in der Pendelvorrichtung (6) genutzt werden.

2. Anlage zur Nutzung der Meereswellen vorzugsweise zur Erzeugung von elektrischer Energie und zur Dämpfung der Wellenergie im Bereich der Küstenzonen nach Anspruch 1 **dadurch gekennzeichnet, dass** die elektrische Energiegewinnung durch den in der Pendelvorrichtung (6) eingebauten elektrischen Lineargenerator (6.7), der die Hin- und Herbewegungen des Gestänges (7) direkt nutzt oder der Hub der Hin- und Herbewegungen des Gestänges (7) mittels Übersetzungen vergrößert wird.

3. Anlage zur Nutzung der Meereswellen vorzugsweise zur Erzeugung von elektrischer Energie und zur Dämpfung der Wellenergie im Bereich der Küstenzonen nach Anspruch 1 **dadurch gekennzeichnet, dass** die elektrische Energiegewinnung durch den in der Pendelvorrichtung (6) eingebauten rotierenden elektrischen Generator (6.8) erfolgt und dazu die Hin- und Herbewegungen des Gestänges (7) über eine Zahnstange (6.1) und die damit verzahnten Ritzeln (6.2), welche gegenläufige Freiläufe besitzen, die die Hin- und Herbewegungen immer in eine in die gleiche Richtung wirkende Drehbewegung umformen und zum Antrieb des elektrischen Generators (6.8) nutzen.

4. Anlage zur Nutzung der Meereswellen vorzugsweise zur Erzeugung von elektrischer Energie und zur Dämpfung der Wellenergie im Bereich der Küstenzonen nach Anspruch 1 **dadurch gekennzeichnet, dass** an Stelle der Gewinnung von elektrischer Energie die Gewinnung hydraulischer Energie vorgesehen ist, so werden über das Gestänge (7) die Kolben (6.10.3) der im Pendelgehäuse gegenläufigen ventilgesteuerten hydraulischen Pumpen angetrieben, welche die Hin- und Herbewegung im Gestänge nutzen.

5. Anlage zur Nutzung der Meereswellen vorzugsweise zur Erzeugung von elektrischer Energie und zur Dämpfung der Wellenergie im Bereich der Küstenzonen nach Anspruch 1 **dadurch gekennzeichnet, dass** die Gestänge (7) vom Befestigungsgelenk (8.1) des Schwimmkörpers (8) doppelt über Kreuz in das Pendelgehäuse (6) des Gestells (1), wie folgt angeordnet werden:
Vom Schwimmkörper (8) oben links (7.1) zum Pendelgehäuse (6) unten rechts (7.1)
Vom Schwimmkörper (8) oben rechts (7.2) zum Pendelgehäuse (6) unten links (7.2)
Vom Schwimmkörper (8) unten links (7.3) zum Pendelgehäuse (6) oben rechts (7.3)
Vom Schwimmkörper (8) unten rechts (7.4) zum Pendelgehäuse (6) oben links, (7.4)
und mit dieser Anordnung der Gestänge (7) zum Gestell (1) alle Bewegungen des Schwimmkörpers (8) auf die im Pendelgehäuse (6) enthaltenen Energiewandler wirken.

6. Anlage zur Nutzung der Meereswellen vorzugsweise zur Erzeugung von elektrischer Energie und zur Dämpfung der Wellenergie im Bereich der Küstenzonen nach Anspruch 1 **dadurch gekennzeichnet, dass** das Spiel der Bewegungen des Schwimmkörpers (8) zum Gestell (1) am Meeresboden (3) über Fixierungen der Gestänge (7) am Pendelgehäuse (6) begrenzt wird.

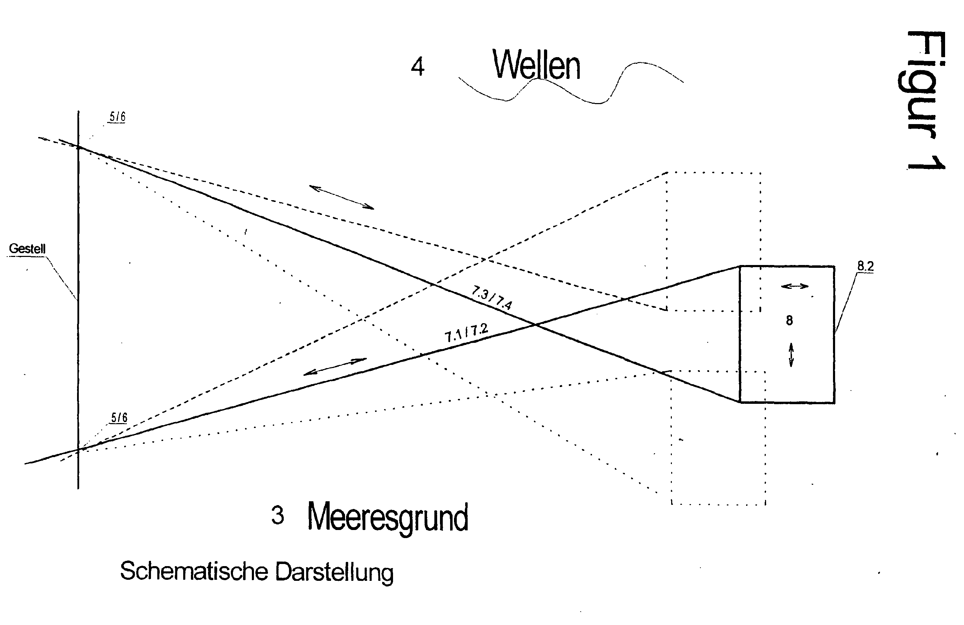

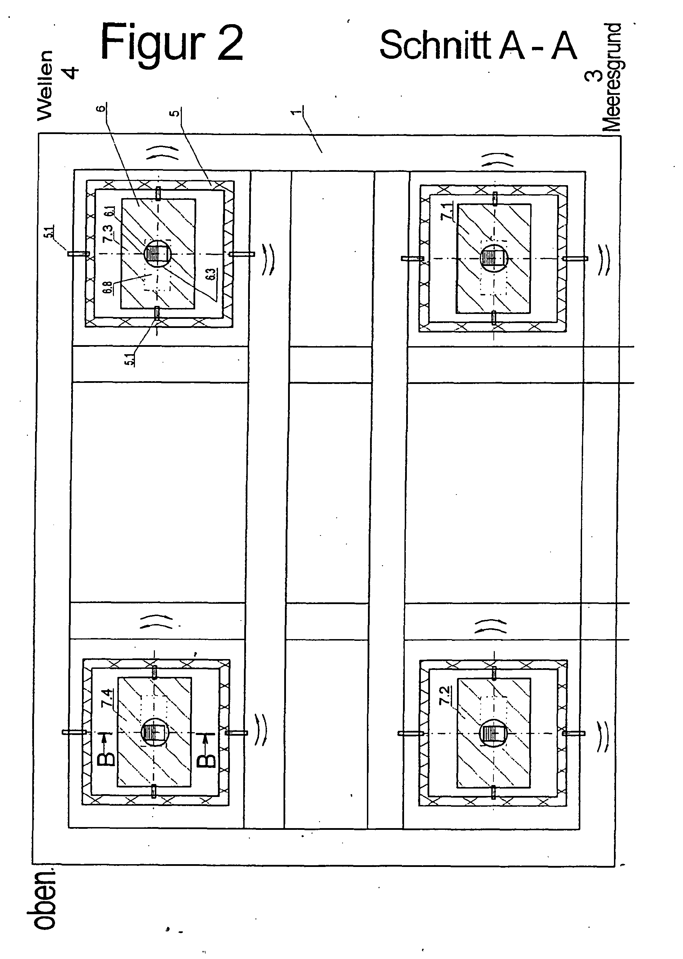

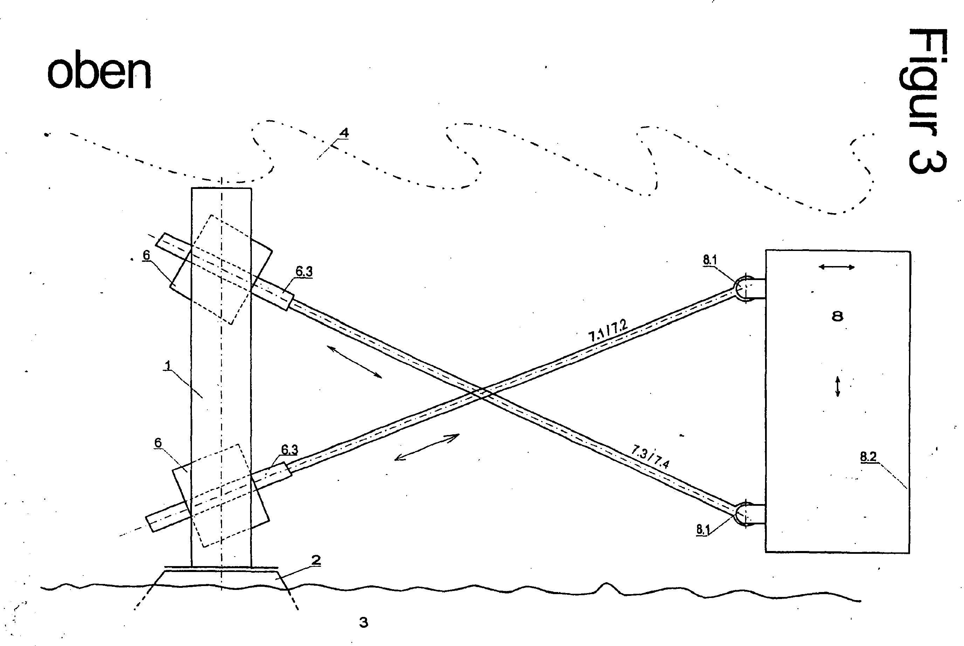

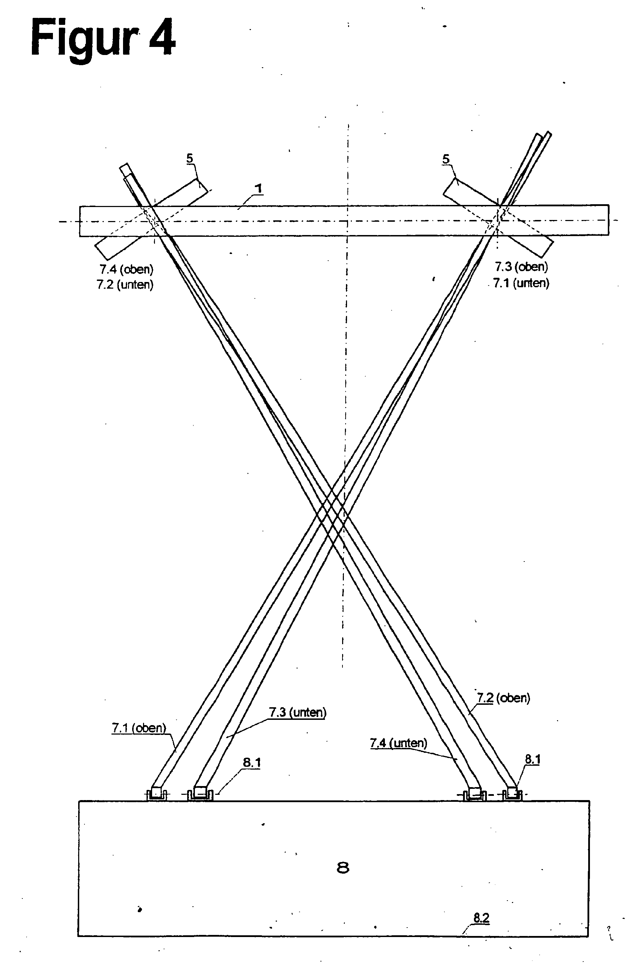

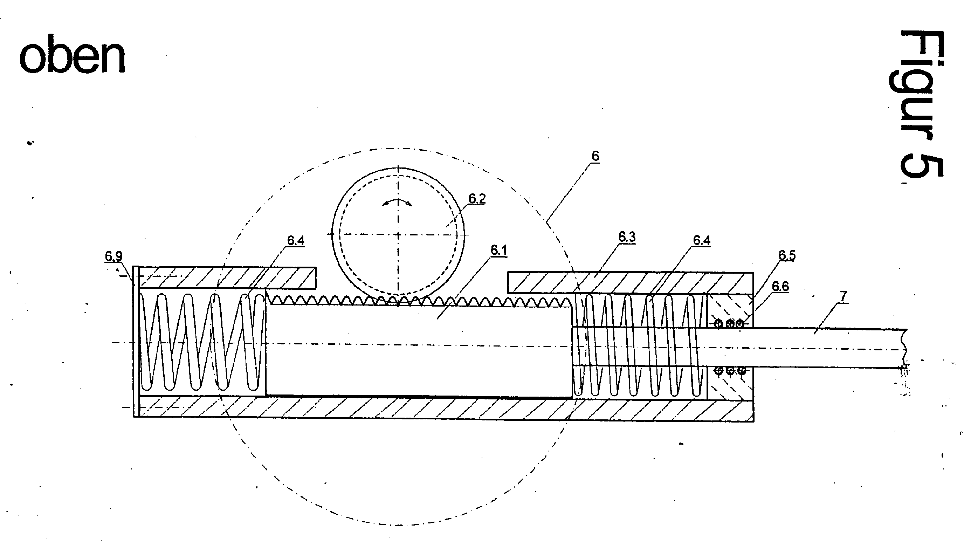

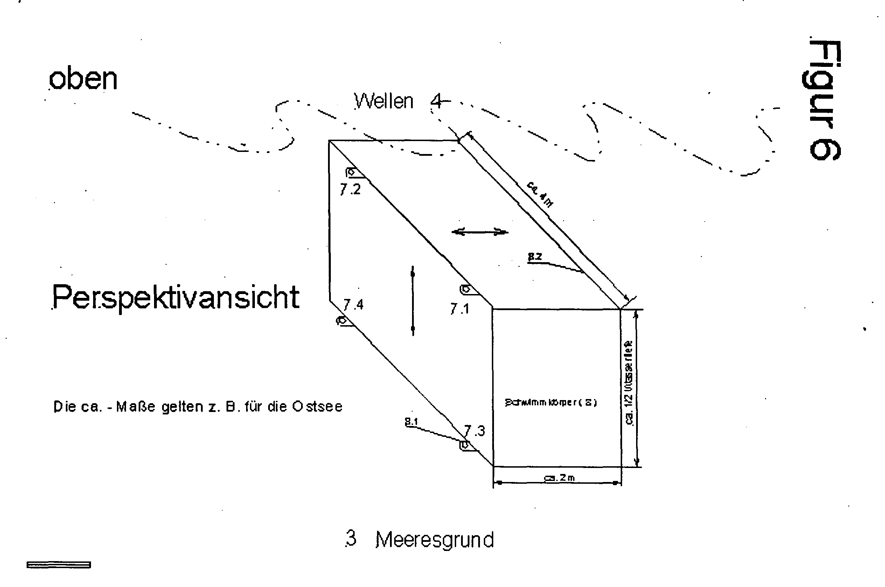

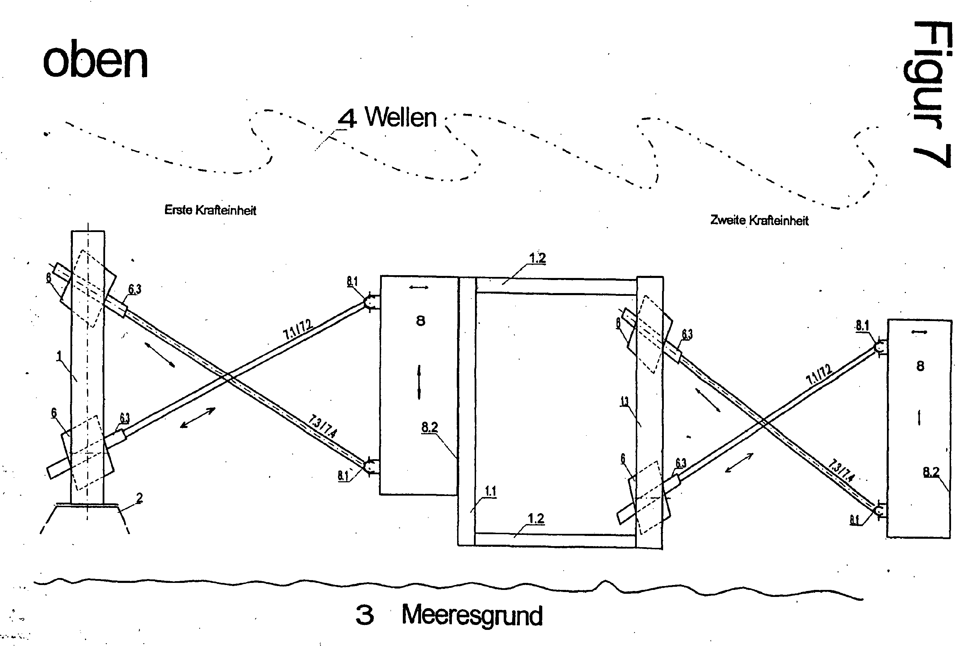

7. Anlage zur Nutzung der Meereswellen vorzugsweise zur Erzeugung von elektrischer Energie und zur Dämpfung der Wellenergie im Bereich der Küstenzonen nach Anspruch 1 **dadurch gekennzeichnet, dass** die Anlagen mehrfach als Gruppen (Figur 7) hintereinander geschaltet werden können, indem an der Rückseite des ersten Schwimmkörpers (8) ein Gestell (1) fixiert wird und dort ein weiterer Schwimmkörper einschließlich Gestänge angeordnet werden kann.

8. Anlage zur Nutzung der Meereswellen vorzugsweise zur Erzeugung von elektrischer Energie und zur Dämpfung der Wellenergie im Bereich der Küstenzonen nach Anspruch 1 **dadurch gekennzeichnet, dass** die Anlagen mehrfach als Gruppen parallel in einem Abstand vor der Küste auf dem Meeresboden angeordnet werden und eine Dämpfung der Brandung analog einer Sandbank bewirken.
